# FASCICULE DE BREVET EUROPEEN

(11) **EP 3 829 015 B1**
(45) Date de publication et mention de la délivrance du brevet: **23.08.2023**
(21) Numéro de dépôt: 20198312.9
(22) Date de dépôt: 25.09.2020
(51) Int. Cl.: H02G 3/18, E05F 3/14, A47B 21/06, E05F 1/12

(54) **APPAREILLAGE A SUPPORT D'APPAREILLAGE BASCULANT**
GERÄT MIT HALTERUNG FÜR SCHWENKBARES GERÄT
APPLIANCE WITH TILTING APPLIANCE MOUNTING

(30) Priorité: 26.11.2019 FR 1913241
(43) Date de publication de la demande: 02.06.2021
(73) Titulaire: Legrand France, 87000 Limoges (FR); Legrand SNC, 87000 Limoges (FR)
(72) Inventeur: DECORE, Raphaël, 72140 Sillé-Le-guillaume (FR); PERRIGNON DE TROYES, François, 72100 Le Mans (FR)
(74) Mandataire: Jacobacci Coralis Harle

(56) Documents cités:
- CN-A- 105 071 114
- CN-U- 207 691 142
- DE-A1-102010 048 002

## Description

La présente invention concerne, de manière générale, les appareillages à encastrer dans une paroi, dont le mécanisme est monté sur un support basculant pour disparaître sous la paroi ou être accessible en saillie d'une telle paroi.

L'invention concerne en particulier un appareillage qui comprend :
- une plaque de façade présentant une ouverture;
- un support d'appareillage monté à basculement au travers de ladite ouverture entre une position abaissée dans laquelle il s'étend en dessous de la plaque de façade et une position relevée dans laquelle il s'étend en majeure partie au-dessus de la plaque de façade ; et
- un système de pivotement du support d'appareillage qui comprend un arbre d'entraînement en rotation, au moins un amortisseur et au moins un ressort de torsion sous contrainte liés à l'arbre d'entraînement en rotation ainsi que deux bielles parallèles, agencées de manière à transmettre le mouvement de rotation de l'arbre d'entraînement en rotation audit support d'appareillage.

On connaît déjà notamment du document CN207691142, un appareillage électrique du type précité dans lequel, grâce aux bielles, l'axe de rotation du support d'appareillage est décalé par rapport à l'arbre d'entraînement en rotation du système de pivotement.

L'inconvénient majeur de cet appareillage électrique est que le support d'appareillage présente un mouvement de pivotement avec des degrés de liberté par rapport à l'arbre d'entraînement en rotation du système de pivotement ce qui provoque une mauvaise répartition des efforts de rotation et une accentuation des défauts d'alignement entre le support d'appareillage et les extrémités de l'arbre d'entraînement en rotation.

Afin de remédier à cet inconvénient de l'état de la technique, la présente invention propose un appareillage tel que défini en introduction dans lequel le système de pivotement comprend une pièce de transmission monobloc rigide qui se présente sous la forme d'un U avec une partie longitudinale et deux parties latérales, la partie longitudinale s'étendant le long de l'arbre d'entraînement en rotation et lesdites parties latérales s'étendant de part et d'autre des extrémités de celui-ci si bien que la pièce de transmission encadre l'arbre d'entraînement en rotation, l'arbre d'entraînement à rotation étant lié à cette pièce de transmission monobloc, à la racine des deux parties latérales dont les extrémités libres forment lesdites bielles et coopèrent de manière glissante avec ledit support d'appareillage.

Avantageusement, la pièce de transmission de l'appareillage conforme à l'invention permet de répartir uniformément les efforts de rotation exercés par le système de pivotement sur le support d'appareillage et de remédier au défaut d'alignement éventuel entre les extrémités de l'arbre d'entraînement en rotation et le support d'appareillage

Ainsi, grâce à ladite pièce de transmission, le basculement du support d'appareillage de l'appareillage, depuis sa position abaissée jusqu'à sa position relevée, s'effectue de manière fluide sans coincement ni désaxage.

Selon d'autres caractéristiques avantageuses mais non limitatives de l'appareillage conforme à l'invention :
- chacune des deux bielles comporte deux bords longitudinaux externes engagés de manière glissante dans des moyens de rainure prévus en saillie sur une face d'une paroi latérale principale du support d'appareillage ;
- lesdits moyens de rainure comprennent deux pions de centrage présentant chacun une tête et un pied cylindrique, disposés de part et d'autre de chaque bielle de sorte que chaque bord longitudinal externe de ladite bielle est engagé de manière glissante sous la tête d'un pion de centrage contre la surface externe du pied cylindrique dudit pion de centrage ;
- chacune des deux bielles comporte deux bords longitudinaux internes engagés de manière glissante dans des moyens de rainure prévus en saillie sur une face d'une paroi latérale principale du support d'appareillage ;
- lesdits deux bords longitudinaux internes de chaque bielle sont les deux bords longitudinaux parallèles d'une lumière oblongue prévue dans ladite bielle ;
- lesdits moyens de rainure comprennent, pour chaque bielle, un pion de centrage avec une tête et un pied cylindrique, les deux bords longitudinaux internes de ladite bielle étant engagés de manière glissante sous la tête du pion de centrage contre la surface externe du pied cylindrique dudit pion de centrage ;
- ladite surface externe du pied cylindrique de chaque pion de centrage est libre de tourner autour de l'axe dudit pied cylindrique ;
- ladite pièce de transmission est réalisée par découpage et pliage d'une tôle métallique ;
- ladite pièce de transmission est réalisée en acier ; et
- ladite pièce de transmission est réalisée par moulage d'une matière métallique telle que du Zamak.

La description qui va suivre en regard des dessins annexés, donnés à titre d'exemples non limitatifs, fera bien comprendre en quoi consiste l'invention et comment elle peut être réalisée.

Sur les dessins annexés :
La figure 1 est une vue schématique en perspective avant d'un mode de réalisation préférentiel d'un appareillage selon l'invention, encastré dans une paroi de réception, en position abaissée d'attente,
La figure 2 est une vue schématique complète en perspective de trois quart de l'appareillage de la figure 1, en position abaissée,
La figure 3 est une vue schématique en perspective de dessous partiellement éclatée de l'appareillage de la figure 2,
La figure 4 est une vue schématique éclatée en perspective de dessus de la plaque de façade et du système de pivotement de l'appareillage de la figure 2,
La figure 5 est une vue schématique éclatée en perspective de dessous de la plaque de façade et du système de pivotement de l'appareillage de la figure 2,
La figure 6 est une vue schématique de dessus de l'appareillage de la figure 2 selon une version allégée pour plus de clarté, c'est-à-dire avec un support d'appareillage non équipé de mécanisme d'appareillage et de la partie inférieure de carénage, cet appareillage électrique étant encastré dans une paroi de réception et en position abaissée d'attente,
La figure 7 est une vue en coupe selon plan A-A de la figure 6,
La figure 8 est une vue en coupe similaire à celle de la figure 7 de l'appareillage avec sa touche d'actionnement en position d'actionnement,
La figure 9 est une vue en coupe similaire à celle de la figure 7 de l'appareillage avec sa touche d'actionnement en position d'actionnement et le support d'appareillage libéré qui amorce sa montée,
La figure 10 est une vue en coupe similaire à celle de la figure 7 de l'appareillage avec sa touche d'actionnement en position d'attente et le support d'appareillage à mi-parcours entre sa position abaissée et sa position relevée,
La figure 11 est une vue schématique en perspective de trois quart de l'appareillage de la figure 2 en position relevée, selon une version allégée dans laquelle le support d'appareillage n'est pas équipé de la partie inférieure de carénage,
La figure 12 est une vue schématique en perspective de dessous de la figure 11, selon une version allégée dans laquelle le support d'appareillage n'est pas équipé de mécanisme d'appareillage,
La figure 13 est une vue de côté de l'appareillage de la figure 2, en position relevée,
La figure 14 est une vue en coupe similaire à celle de la figure 7 de l'appareillage avec sa touche d'actionnement en position d'attente et le support d'appareillage en position relevée,
La figure 15 est une vue schématique de dessus d'un autre mode de réalisation de l'appareillage conforme à l'invention, dans une version allégée pour plus de clarté, c'est-à-dire avec un support d'appareillage non équipé de mécanisme d'appareillage et de la partie inférieure de carénage, cet appareillage étant encastré dans une paroi de réception et en position abaissée d'attente,
La figure 16 est une vue en coupe selon le plan A-A de la figure 15,
La figure 17 est une vue en coupe similaire à celle de la figure 16 de l'appareillage avec la touche d'actionnement en position d'attente et le support d'appareillage à mi-parcours entre sa position abaissée et sa position relevée, et
La figure 18 est une vue en coupe similaire à celle de la figure 16 de l'appareillage avec la touche d'actionnement en position d'attente et le support d'appareillage en position relevée.

En préliminaire on notera que, dans la suite de la description, les différents modes de réalisation de l'appareillage conforme à l'invention seront décrits tels qu'ils apparaissent à l'utilisateur lorsqu'ils sont montés dans une paroi de réception ou d'encastrement. Dans la description, les termes «avant» et « arrière » seront définis par rapport au regard d'un utilisateur. Ainsi, une face avant sera orientée vers l'utilisateur tandis qu'une face arrière sera orientée à l'opposé de l'utilisateur.

En outre, dans la présente description, les éléments identiques ou similaires des différents modes de réalisation décrits et représentés seront, dans la mesure du possible, référencés par les mêmes signes de référence et ne seront pas décrits à chaque fois.

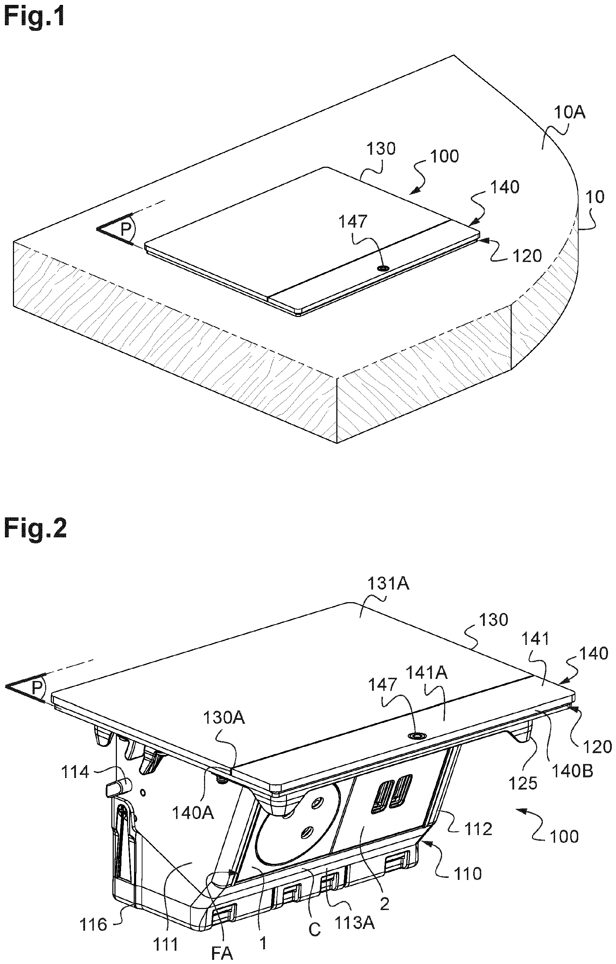

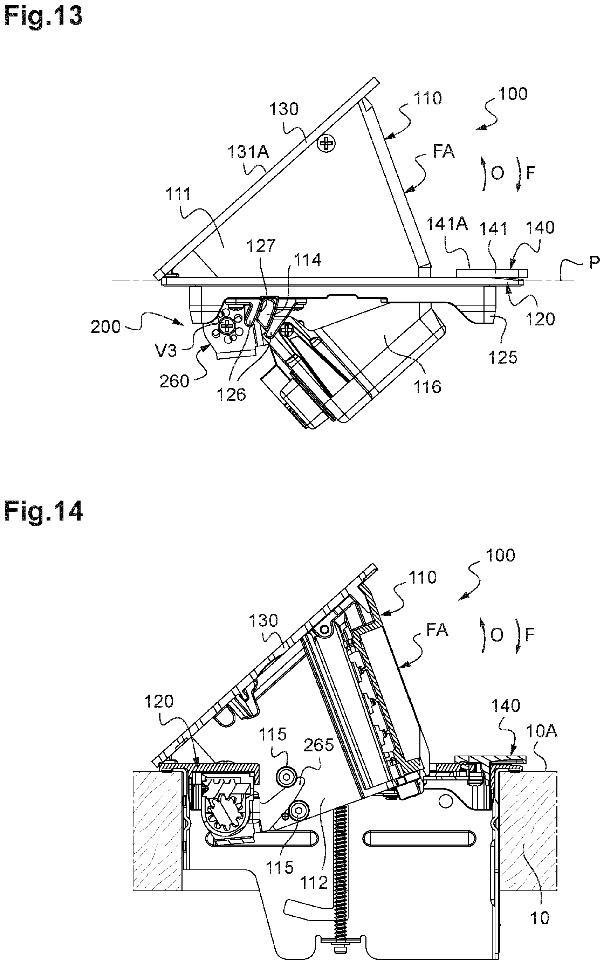

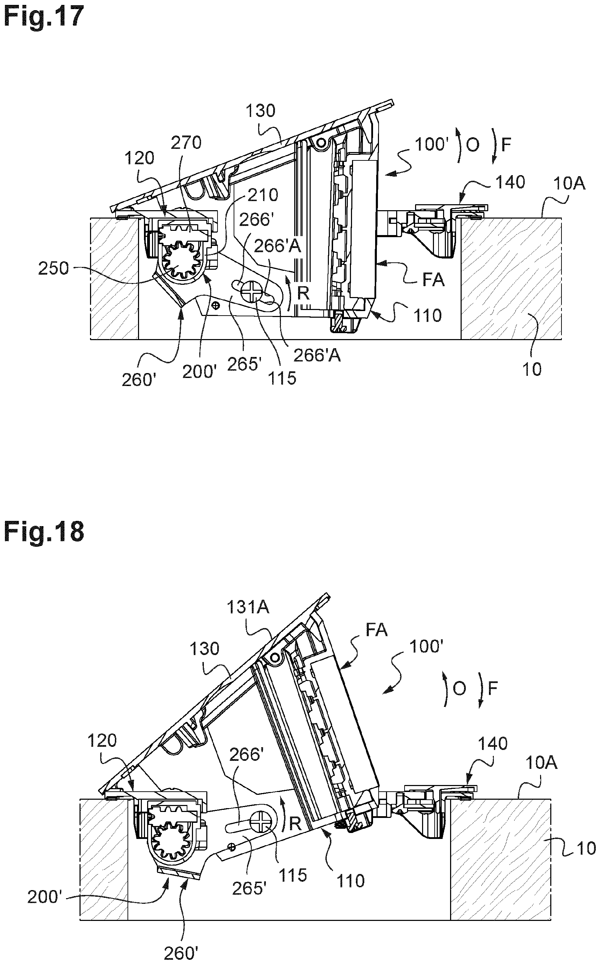

Sur les différentes figures on a représenté deux modes de réalisation d'un appareillage 100 ; 100' à encastrer dans une paroi de réception 10 dont le support d'appareillage 110 est basculant pour disparaître sous cette paroi (voir figure 1) ou être accessible en saillie de celle-ci (voir figures 14 et 18).

La paroi de réception 10 peut être une paroi d'un mobilier de bureau tel qu'une table de travail ou un meuble de rangement ou encore une paroi de plancher technique.

L'appareillage 100 ; 100' ici représenté est un bloc multiprise comprenant une prise de courant 1 et une double prise USB 2 (voir figure 2).

Bien entendu, il pourrait s'agir d'un tout autre appareillage tel qu'un autre bloc multiprise comprenant une prise de courant faible comme une prise RJ45 ou une prise téléphonique ou encore une prise d'antenne. Il pourrait s'agir d'un appareillage électronique.

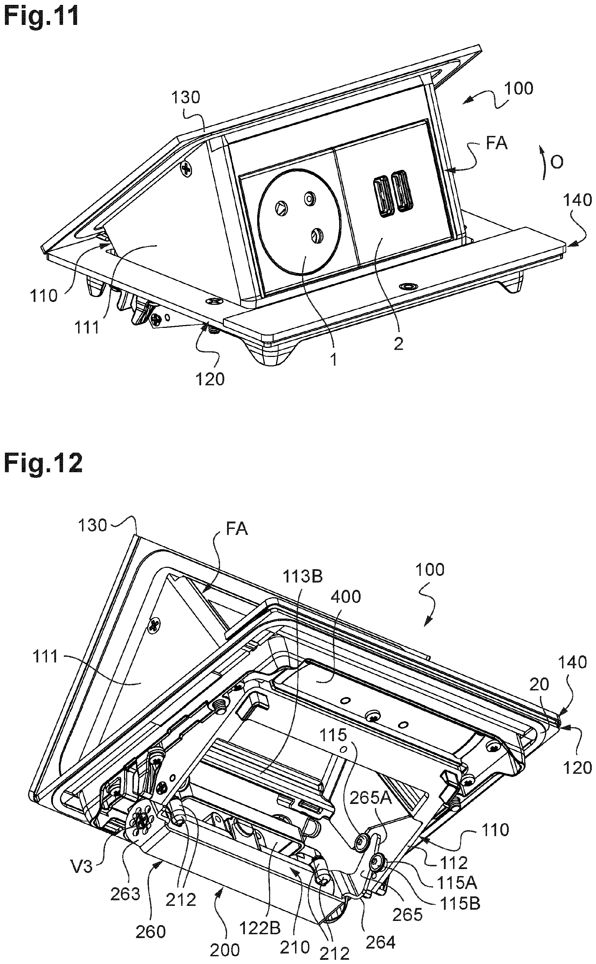

Quel que soit le mode de réalisation représenté, cet appareillage 100 ; 100' comporte :
- une plaque de façade 120 présentant une ouverture 124 ;
- un support d'appareillage 110 monté à basculement au travers de ladite ouverture 124 entre une position abaissée dans laquelle il s'étend en dessous de la plaque de façade 120 (voir figure 2) et une position relevée dans laquelle il s'étend en majeure partie au-dessus de la plaque de façade 120 (voir figure 11) ;
- un système de pivotement 200 ; 200' du support d'appareillage 110 ; et
- un système de verrouillage 300, débrayable à l'aide d'une touche d'actionnement 140, pour bloquer le support d'appareillage 110 dans l'une ou l'autre de ses positions abaissée et relevée.

Les deux modes de réalisation représentés de l'appareillage 100 ; 100' diffèrent uniquement par un élément précis du système de pivotement 200 ; 200'.

La description qui va suivre sera donc commune aux deux modes de réalisation représentés et la différence relative au système de pivotement sera mise en lumière au moment opportun.

La plaque de façade 120 de l'appareillage 100 ; 100' est une pièce avantageusement réalisée en matière métallique.

Elle est destinée à s'appliquer contre la face avant 10A de la paroi de réception 10 de l'appareillage 100 ; 100'.

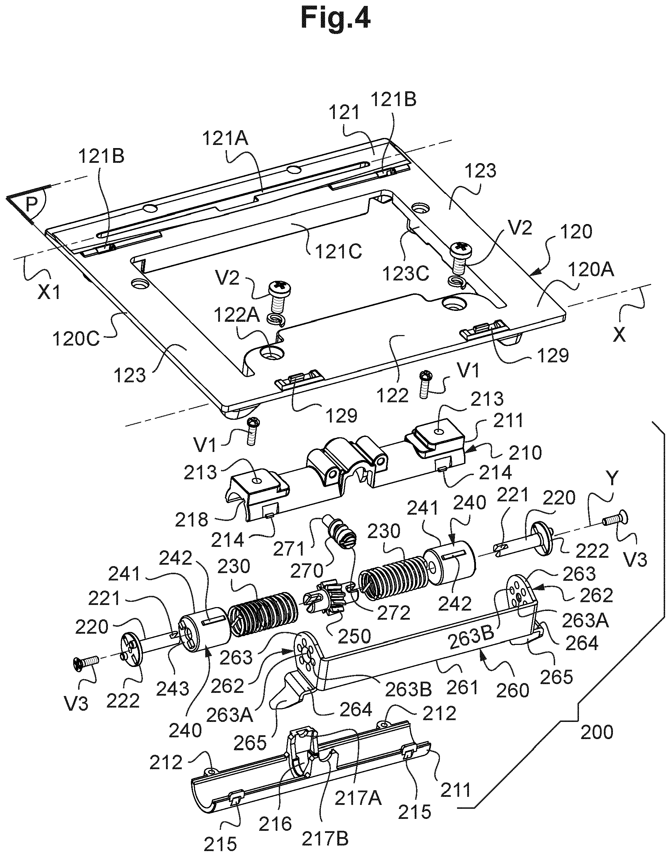

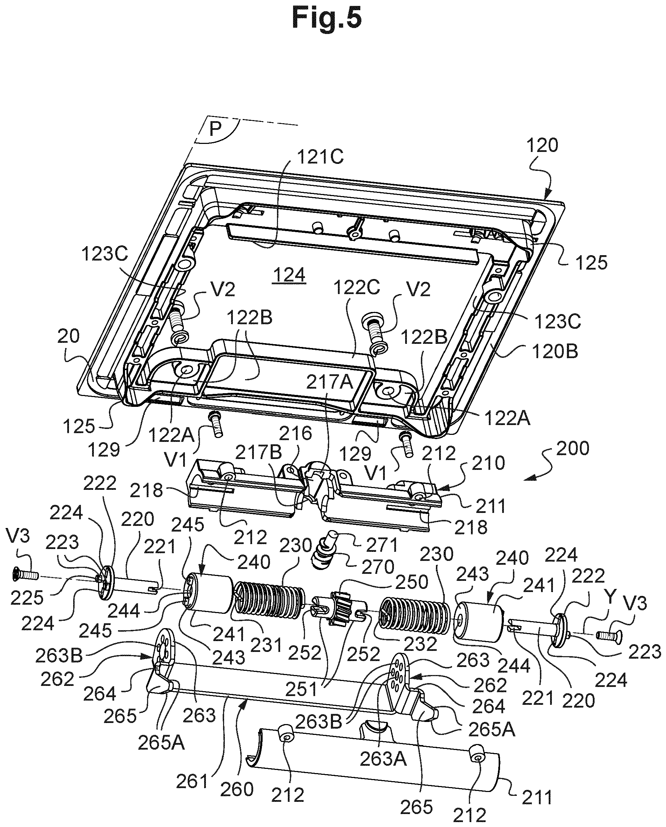

Comme le montrent notamment les figures 4 et 5, cette plaque de façade 120 comporte un cadre relativement plat délimité entre un bord périphérique externe 120C et un bord périphérique interne 121C, 122C, 123C. Le bord périphérique externe 120C suit ici un contour rectangulaire. Bien entendu, en variante, on pourrait prévoir que ce cadre présente un contour extérieur carré ou circulaire.

Le cadre comporte quatre branches dont une branche longitudinale avant 121 et une branche longitudinale arrière 122 reliées par deux branches latérales 123.

Selon les exemples représentés, le bord périphérique interne 121C, 122C, 123C du cadre de la plaque de façade 120 délimite une ouverture 124 centrale rectangulaire (voir figures 4 et 5) mais on pourrait également prévoir, selon d'autres variantes non représentées, que ce bord interne délimite une ouverture carrée ou circulaire. On pourrait également prévoir que le cadre de la plaque de façade comprenne plusieurs ouvertures destinées chacune à recevoir un support d'appareillage basculant.

La face avant 120A du cadre de la plaque de façade 120 participe à l'esthétique de l'ensemble (voir figure 11). La face arrière du cadre de la plaque de façade 120 porte des éléments techniques comme, des nervures de renfort 125, des éléments de butée 126 qui délimitent une rainure de butée 127, des cheminées 122A, des renfoncements 122B pour le logement et la fixation de différents éléments de l'appareillage 100, 100' qui seront explicités plus en détail ultérieurement (voir figure 5). La face arrière comporte en outre le long du bord périphérique externe 120C du cadre de la plaque de façade 120, une surface plane 120B pour prendre appui contre la paroi de réception. Cette surface plane 120B d'appui du cadre de la plaque de façade 120 reçoit avantageusement un joint 20 d'étanchéité à l'eau et aux poussières, ce joint 20 permettant d'épouser les irrégularités éventuelles de la face avant 10A de la paroi de réception 10.

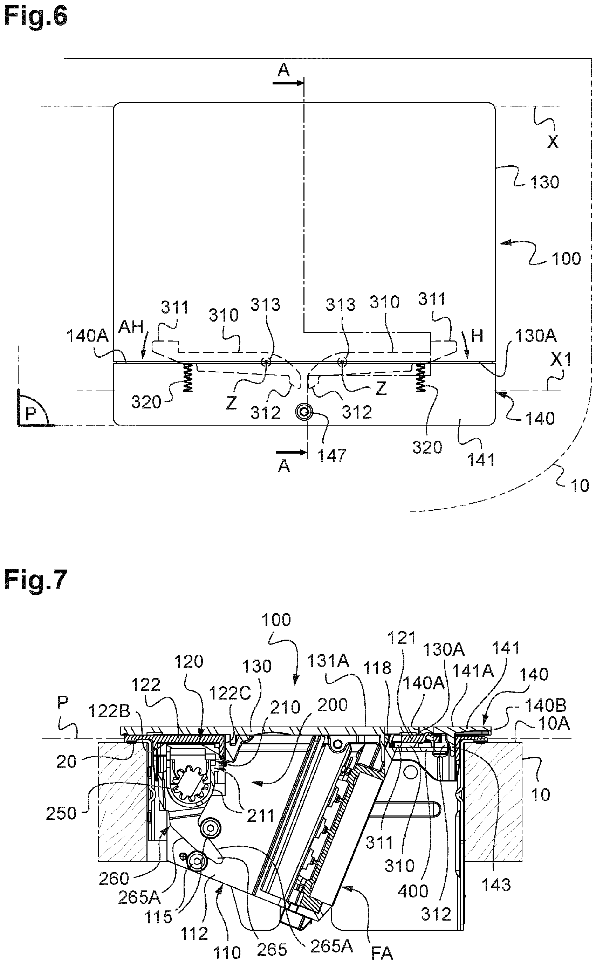

Le support d'appareillage 110 est réalisé avantageusement en matière métallique. Il comporte deux parois latérales principales 111, 112 parallèles qui s'étendent perpendiculairement au plan moyen P du cadre de la plaque de façade 120 (voir figures 2 et 7).

Comme cela sera explicité très en détail ultérieurement, ces parois latérales principales 111, 112 sont, à l'arrière du support, c'est-à-dire à l'opposé de la façade dudit support, indirectement liées aux deux extrémités d'un arbre d'entraînement en rotation du système de pivotement 200 ; 200'.

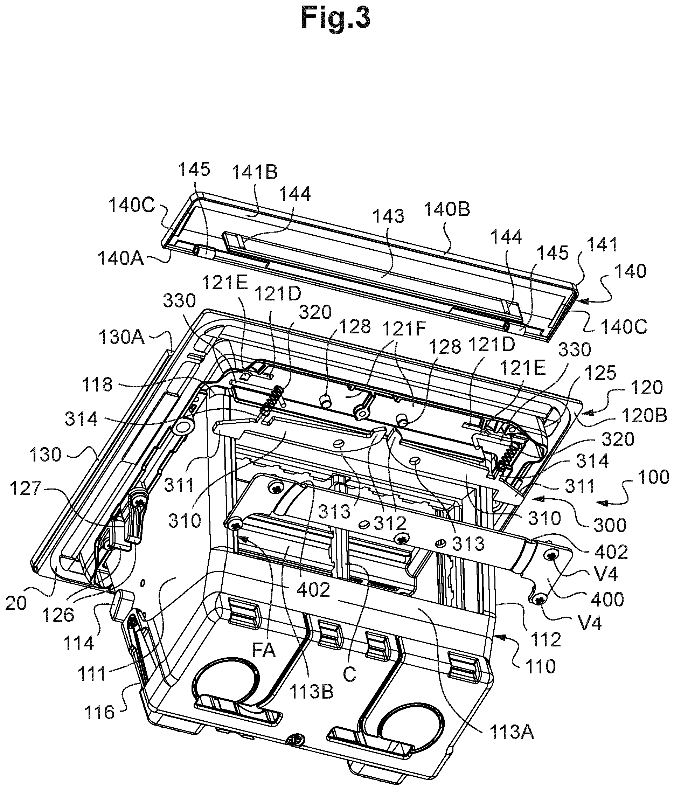

À l'avant du support d'appareillage 110, c'est-à-dire du côté de la façade de ce support, les parois latérales principales 111, 112 sont liées entre elles par une poutre transversale inférieure 113A (voir figure 3).

À l'arrière du support d'appareillage 110 mais en avant du système de pivotement 200 ; 200', les parois latérales principales 111, 112 sont également liées entre elles par une poutre transversale supérieure 113B (voir figures 3 et 12).

Les parois latérales principales 111, 112 et les poutres transversales inférieure et supérieure 113A, 113B sont issues d'une seule et même pièce monobloc.

Comme le montre la figure 3, un cadre de façade C est rapporté entre les deux parois latérales principales 111, 112 et la poutre transversale inférieure 113A du support d'appareillage 110. Il délimite deux ouvertures carrées d'accès à un espace interne défini entre les parois latérales principales 111, 112 du support d'appareillage 110. Les mécanismes d'appareillage 1, 2 sont rapportés dans ces ouvertures carrées de manière que, d'une part, les socles de ces mécanismes sont encliquetés ou emboîtés sur les montants de ce cadre de façade C et s'étendent à l'intérieur dudit espace interne et que les enjoliveurs ferment lesdites ouvertures carrées (voir la figure 2).

Comme le montre la figure 2, la façade fonctionnelle FA de l'appareillage 100 est formée par les faces avant fonctionnelles des enjoliveurs desdits mécanismes d'appareillage 1, 2, par la face avant du cadre de façade C qui entoure lesdits enjoliveurs ainsi que par les tranches des parois latérales principales 111, 112 et de la poutre transversale inférieure 113A.

Une des parois latérales principales 111 du support d'appareillage 110 porte sur sa face externe, à proximité de son bord arrière opposé à la façade fonctionnelle FA de l'appareillage 100 ; 100', un élément de butée 114 au contour oblong, destiné à s'engager dans la rainure de butée 127 de la plaque de façade 120 lorsque le support d'appareillage 110 bascule depuis sa position abaissée vers sa position relevée. La mise en butée de cet élément de butée 114 contre le fond de la rainure de butée 127 permet d'indexer la position stable relevée du support d'appareillage 110 (voir figure 13).

En partie inférieure, à l'opposé de la poutre transversale supérieure 113B, une partie inférieure de carénage 116 fixée au moyen de vis aux parois latérales principales 111, 112 du support d'appareillage 110, ferme l'espace interne défini entre lesdites parois latérales principales 111, 112 (voir figures 2 et 3).

En partie supérieure, à l'opposé de la poutre transversale inférieure 113A, un couvercle 130 est solidarisé au moyen de vis aux deux parois latérales principales 111, 112 du support d'appareillage 110. Le couvercle 130 est principalement formé d'une plaque qui s'étend perpendiculairement aux parois latérales principales 111, 112. Il ferme l'espace interne défini entre lesdites parois latérales principales 111, 112 et déborde de part et d'autre de cet espace interne (voir figure 3).

Le couvercle 130 est destiné à fermer l'ouverture 124 centrale de la plaque de façade 120 lorsque le support d'appareillage 110 est basculé en position abaissée (voir figures 1 et 2). Comme le montrent les figures 1 et 2, le couvercle 130 présente une forme rectangulaire dont la longueur est légèrement supérieure à la longueur des branches longitudinales avant et arrière 121, 122 du cadre de la plaque de façade 120 et dont la largeur est inférieure à la longueur des branches latérales 123 du cadre de la plaque de façade 120.

Cette largeur est diminuée de la largeur de la touche d'actionnement 140 du système de verrouillage 300 qui, ici, recouvre toute la branche longitudinale avant 121 du cadre de la plaque de façade 120.

Comme le montre plus particulièrement la figure 2, lorsque le support d'appareillage 110 est en position abaissée, le couvercle 130 s'étend dans le prolongement de la touche d'actionnement 140 placée dans une position d'attente, en recouvrant toute la partie de la plaque de façade 120 non recouverte par la touche d'actionnement 140. Le couvercle 130 présente alors un bord longitudinal 130A qui jouxte un rebord longitudinal interne 140A de la touche d'actionnement 140 de sorte que la face avant 131A du couvercle 130 et la face avant 141A de la touche d'actionnement 140 forment esthétiquement une face avant de finition de l'appareillage 100.

Le couvercle 130 est monté à pivotement sur le cadre de la plaque de façade 120 autour d'un axe X parallèle à un côté longitudinal de ladite plaque de façade 120 (voir figure 4). Pour cela, le couvercle 130 porte sur sa face arrière, le long du bord longitudinal opposé au bord longitudinal 130A jouxtant celui de la touche de commande 140, deux saillies, non visibles sur les figures, présentant un profil courbe, engagées dans deux fentes 129 prévues le long du côté longitudinal correspondant du cadre de la plaque de façade 120 (voir figure 4). Le profil courbe desdites saillies coopère de manière glissante avec un profil courbe complémentaire prévu sur les parois internes desdites fentes 129. La coopération à glissement des saillies du couvercle 130 avec les parois internes courbes des fentes 129 de la plaque de façade 120 permet le pivotement du couvercle 130 par rapport à la plaque de façade 120, autour de l'axe X.

À l'arrière, comme le montrent plus particulièrement les figures 4 et 5, le système de pivotement 200 ; 200' comprend, à l'intérieur d'un boîtier 210, ici, un arbre d'entraînement en rotation 220, deux amortisseurs 240 et deux ressorts de torsion 230 sous contrainte liés à l'arbre d'entraînement en rotation 220. Le système de pivotement 200 ; 200' comprend en outre deux bielles 265 ; 265' parallèles, agencées de manière à transmettre le mouvement de rotation de l'arbre d'entraînement en rotation 220 audit support d'appareillage 110.

Selon une variante non représentée, on pourrait prévoir que le système de pivotement comprenne un seul ressort de torsion associé à un seul amortisseur.

Le boîtier 210 présente une forme globalement cylindrique allongée selon un axe Y. Il présente deux ouvertures circulaires aux extrémités. Il est formé de deux coques 211 globalement semi cylindriques, positionnées bord à bord et solidarisées l'une à l'autre le long de leurs bords longitudinaux. Les moyens de solidarisation des deux coques 211 comportent un système d'encliquetage et un système de vissage. Le système d'encliquetage comporte le long d'un bord longitudinal d'une des coques 211 deux dents 214 et le long du bord longitudinal correspondant de l'autre coque 211 deux fenêtres 215 dans lesquelles s'encliquètent les deux dents 214. Le système de vissage comporte le long des deux autres bords longitudinaux correspondants des deux coques 211 deux cheminées taraudées 212 dans lesquelles sont vissées deux vis V1 (voir figure 12).

Selon l'exemple représentés sur les figures 4 et 5, en son centre, le boîtier 210 comporte une forme adéquate 216 pour loger une roue dentée 250 qui coopère avec le filetage d'une vis sans fin 270 dont l'extrémité 271 est engagée dans une encoche interne 217A du boîtier 210 et dont la tête de manoeuvre 272 est accessible à un installateur au travers d'une ouverture circulaire 217B d'une face latérale du boîtier 210.

Deux plots cylindrique 251 liés à la roue dentée 250 s'étendent selon l'axe Y de part et d'autre de ladite roue dentée 250. La roue dentée 250 présente l'axe Y comme axe de rotation et la vis sans fin 270 s'étend selon un axe perpendiculaire à l'axe Y, elle tourne autour d'un axe perpendiculaire à l'axe Y en coopérant avec la denture de la roue dentée 250.

Chaque plot cylindrique 251 est fendu d'une fente 252 axiale qui débouche à l'extrémité libre du plot 251.

La roue dentée 250 et les deux plots cylindriques 251 appartiennent à une seule pièce monobloc métallique.

Il est prévu à l'intérieur du boîtier 210, de manière symétrique de part et d'autre de la roue dentée 250, deux systèmes d'entraînement en rotation.

Chaque système d'entraînement en rotation comprend un demi arbre 220, les deux demi arbres sont alignés selon l'axe Y desdits plots cylindriques 251 et forment ledit arbre d'entraînement en rotation 220 d'axe Y.

Chaque demi arbre 220 est logé à une extrémité du boîtier 210. Chaque demi arbre 220 présente une extrémité pourvue d'une fente 221 et une extrémité pourvue d'un disque 222. Le disque 222 de chaque demi arbre 220 ferme l'ouverture circulaire d'extrémité correspondante du boîtier 210.

Chaque système d'entraînement en rotation comporte un amortisseur 240 lié au demi arbre 220.

L'amortisseur 240 est tout à fait classique. Il comporte un cylindre externe 241 et un cylindre interne 244 concentriques autour de l'axe Y ainsi qu'une matière visqueuse prévue entre les deux cylindres. Le cylindre externe 241 porte sur sa face externe une nervure 242 s'étendant suivant une génératrice du cylindre externe 241 (voir figure 4). Cette nervure 242 est reçue dans une rainure 218 prévue en creux dans la face interne d'une des coques 211 du boîtier 210 de sorte que le cylindre externe 241 de l'amortisseur 240 est fixe dans le boîtier 210. Le cylindre interne 244 de l'amortisseur 240 est capable de tourner dans le cylindre externe 241, en frottant sur la matière visqueuse. Chaque extrémité du cylindre interne 244 est équipée d'un disque annulaire 243 qui ferme l'espace interne cylindrique prévu entre les cylindres externe 241 et interne 244, rempli de la matière visqueuse.

Dans chaque système d'entraînement en rotation, le demi arbre 220 est enfilé au travers du cylindre interne 244 de l'amortisseur 240 de sorte que son extrémité fendue 221 accroche l'extrémité 231 d'un ressort de torsion 230. Un des disques annulaires 243 du cylindre interne 244 de l'amortisseur 240 porte des plots 245 engagés dans des ouvertures 224 prévues en correspondance dans le disque 222 prévu à l'extrémité du demi arbre 220 enfilé au travers du cylindre interne 244 de l'amortisseur 240 de manière à lier le demi arbre 220 audit cylindre interne 244 de l'amortisseur 240.

Chaque système d'entraînement en rotation comporte un ressort de torsion 230. Une extrémité 231 du ressort de torsion 230 est liée à l'extrémité fendue 221 du demi arbre 220 et l'autre extrémité 232 du ressort de torsion 230 est engagée dans la fente 252 d'un plot cylindrique 251 lié à la roue dentée 250 de manière à être liée à ce plot cylindrique 251 (voir figure 5).

Pour ajuster la contrainte de torsion des deux ressorts de torsion 230 du système de pivotement 200, il suffit qu'un installateur visse ou dévisse la vis sans fin 270 grâce à un tournevis dont la pointe est engagée dans la fente de la tête de manoeuvre 272 de ladite vis sans fin 270, de façon à tourner la roue dentée 250 dans le sens adéquat. La roue dentée 250 entraîne en rotation les deux plots 251 qui provoquent alors simultanément la mise sous contrainte ou le relâchement de la contrainte des deux ressorts de torsion 230.

L'ajustement de la contrainte des deux ressorts de torsion 230 permet d'ajuster le couple de pivotement des deux demi arbres 220 et donc de l'arbre d'entraînement en rotation 220.

Ce couple de pivotement est amorti grâce aux deux amortisseurs 240.

Comme le montrent les figures 5 et 12, le boîtier 210 fermé logeant l'ensemble des éléments décrits ci-dessus, est logé dans trois renfoncements 122B prévus sur la face arrière de la branche longitudinale arrière 122 du cadre de la plaque de façade 120, en avant desdits fentes 129 de montage à pivotement du couvercle 130. Le boîtier 210 est solidarisé à la plaque de façade 120 par l'intermédiaire de vis V2 engagées au travers de deux cheminées 122A prévues sur la face arrière de la plaque de façade 120 et débouchant sur la face avant 120A de la branche longitudinale arrière 122 du cadre de ladite plaque de façade 120, ces vis V2 étant vissées dans des conduits taraudés 213 prévus dans une des coques 211 du boîtier 210.

Comme le montrent plus particulièrement les figures 4, 5 et 12, le système de pivotement 200 ; 200' comprend de manière très avantageuse une pièce de transmission 260 ; 260' monobloc rigide placée à l'extérieur du boîtier 210.

Cette pièce de transmission 260 ; 260' se présente sous la forme d'un U avec une partie longitudinale 261 et deux parties latérales 262.

La partie longitudinale 261 de la pièce de transmission 260 ; 260 s'étend, à l'extérieur, le long du boîtier 210, parallèlement à l'axe Y de l'arbre d'entraînement en rotation 220 et lesdites parties latérales 262 s'étendent de part et d'autre des extrémités dudit boîtier 210 si bien que la pièce de transmission 260 ; 260' encadre l'arbre d'entraînement en rotation 220.

L'arbre d'entraînement à rotation 220 est lié à cette pièce de transmission 260 ; 260' monobloc, à la racine des deux parties latérales 262 dont les extrémités libres forment lesdites bielles 265 ; 265' et coopèrent de manière glissante avec ledit support d'appareillage 110.

La racine de chacune desdites parties latérales 262 de la pièce de transmission 260 ; 260' est une joue 263 liée à ladite partie longitudinale 261 et présentant un contour circulaire.

Chaque joue 263 est percée d'un orifice central 263A et de plusieurs orifices périphériques 263B disposés en cercle autour de l'orifice central 263A (voir figures 4 et 5). Le disque 222 d'extrémité de chaque demi arbre 220 porte sur sa face externe deux plots 223 qui s'engagent dans deux orifices périphériques 263B d'une joue 263 de la pièce de transmission 260 pour être liés à celle-ci. En outre, chaque demi arbre 220 comporte un conduit taraudé 225 qui débouche sur la face externe du disque 222 d'extrémité. Une vis V3 est alors engagée au travers de l'orifice central 263A de chaque joue 263 de la pièce de transmission 260 ; 260' et est vissée dans le conduit taraudé 225 du demi arbre 220 correspondant. De cette manière la pièce de transmission 260 ; 260' comporte ses deux joues 263 solidement solidarisées aux deux disques 222 d'extrémité de l'arbre d'entraînement en rotation 220 (voir figure 12).

Avantageusement, ladite pièce de transmission 260 ; 260' est réalisée par découpage et pliage d'une tôle métallique. Elle est préférentiellement réalisée en acier.

En variante, ladite pièce de transmission peut être réalisée par moulage d'une matière métallique telle que du Zamak.

Selon le premier mode de réalisation de l'invention représenté sur les figures 1 à 14, chacune des deux bielles 265 comporte deux bords longitudinaux externes 265A engagés de manière glissante dans des moyens de rainure 115 prévus en saillie sur la face interne de chaque paroi latérale principale 111, 112 du support d'appareillage 110 (voir notamment les figures 7 et 12).

Comme le montre la figure 4, Chaque bielle 265 présente ici la forme d'une plaquette effilée en pointe qui s'étend à partir d'un décrochement 264 établissant la jonction entre la bielle 265 et la joue 263 correspondante de la pièce de transmission 260 monobloc. La joue 263, le décrochement 264 et la bielle 265 forment la partie latérale 262 correspondante de la pièce de transmission 260.

Les deux bords longitudinaux externes 265A de chaque plaquette effilée en pointe 265 sont engagés de manière glissante dans lesdits moyens de rainure prévus sur la face interne de la paroi latérale principale 111, 112 correspondante du support d'appareillage 110.

Comme le montre plus particulièrement la figure 12, lesdits moyens de rainure comprennent deux pions de centrage 115 présentant chacun une tête 115B et un pied cylindrique 115A, disposés de part et d'autre de chaque bielle 265 de sorte que chaque bord longitudinal externe 265A de ladite bielle 265 est engagé de manière glissante sous la tête 115B d'un pion de centrage 115 contre la surface externe du pied cylindrique 115A dudit pion de centrage 115. La surface externe du pied cylindrique 115A de chaque pion de centrage 115 est libre de tourner autour de l'axe dudit pied cylindrique 115A.

Les bords longitudinaux externes 265A desdites bielles 265 présentent une longueur adaptée de sorte que le glissement des bielles 265 dans lesdits moyens de rainure prévus sur le support d'appareillage 110 entraîne le basculement de ce dernier depuis sa position abaissée jusqu'à sa position relevée et réciproquement.

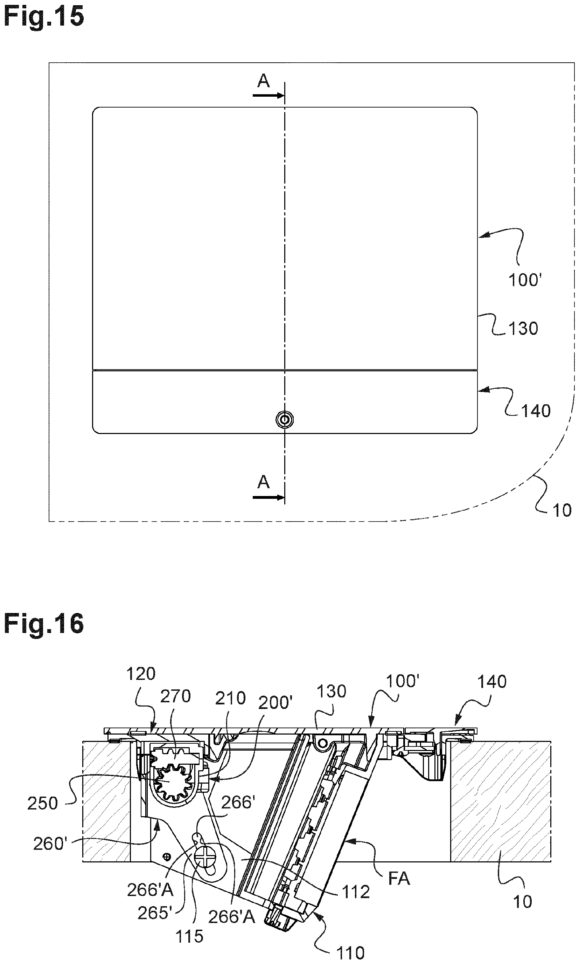

Selon le deuxième mode de réalisation de l'invention représenté sur les figures 15 à 18, chacune des deux bielles 265' comporte deux bords longitudinaux internes 266'A engagés de manière glissante dans des moyens de rainure 115 prévus en saillie sur la face interne de chaque paroi latérale principale 111, 112 du support d'appareillage 110. Chaque bielle 265' présente également ici la forme d'une plaquette qui s'étend à partir d'un décrochement établissant la jonction entre la bielle 265' et la joue correspondante de la pièce de transmission 260' monobloc. La joue, le décrochement et la bielle 265' forment la partie latérale correspondante de la pièce de transmission 260'.

Ici, comme le montrent plus particulièrement les figures 16 et 17, les deux bords longitudinaux internes 266'A de chaque bielle 265' sont les deux bords longitudinaux parallèles d'une lumière oblongue 266' prévue dans la plaquette formant ladite bielle 265'.

Lesdits moyens de rainure comprennent, pour chaque bielle 265', un pion de centrage 115 avec une tête et un pied cylindrique, les deux bords longitudinaux internes 266'A de ladite bielle 265' étant engagés de manière glissante sous la tête du pion de centrage contre la surface externe du pied cylindrique dudit pion de centrage 115. Ici également, ladite surface externe du pied cylindrique de chaque pion de centrage est libre de tourner autour de l'axe dudit pied cylindrique.

La longueur de la lumière oblongue 266' de chaque bielle 265' est adaptée de sorte que le glissement des bielles 265' dans lesdits moyens de rainure prévus sur le support d'appareillage 110 entraîne le basculement de ce dernier depuis sa position abaissée jusqu'à sa position relevée et réciproquement.

Avantageusement, la pièce de transmission 260 ; 260' permet de répartir uniformément les efforts de rotation exercés par le système de pivotement 200 ; 200' sur le support d'appareillage 110 et de remédier au défaut d'alignement éventuel entre les extrémités de l'arbre d'entraînement en rotation 220 et le support d'appareillage 110.

Ainsi, grâce à ladite pièce de transmission 260 ; 260', le basculement du support d'appareillage 110 de l'appareillage 100 ; 100', depuis sa position abaissée jusqu'à sa position relevée, s'effectue de manière fluide sans coincement ni désaxage. Ce mouvement de basculement sera décrit plus en détail ultérieurement dans le cadre de la description du fonctionnement global de l'appareillage 100 ; 100'.

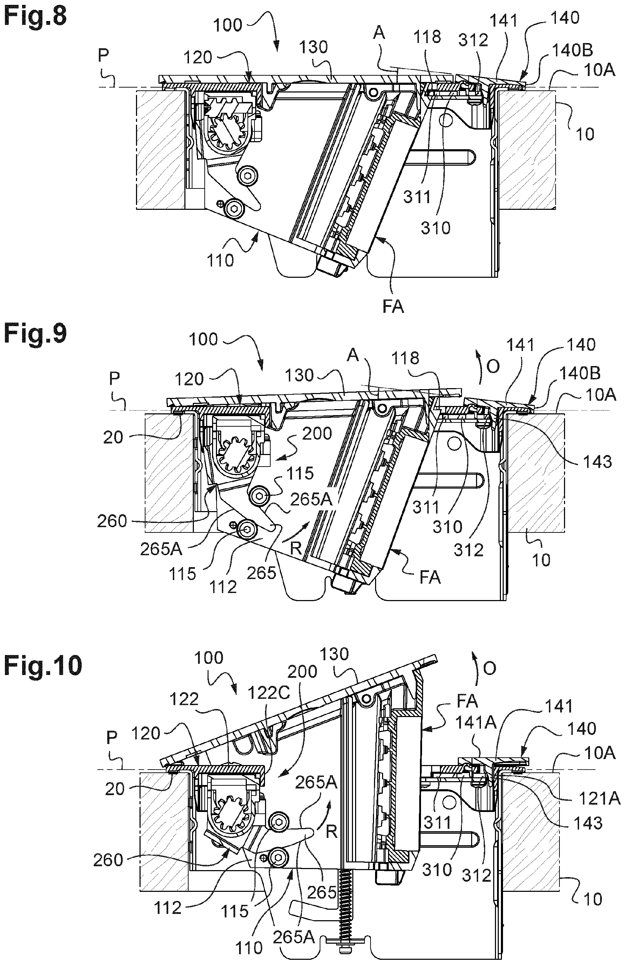

Quel que soit le mode de réalisation représenté, comme le montrent plus particulièrement les figures 3 et 6, le système de verrouillage 300 de l'appareillage 100 comprend, d'une part, au moins un bras de verrouillage 310 déplaçable entre une position de verrouillage dans laquelle une partie de blocage 311 dudit bras de verrouillage 310 prend appui contre une surface de blocage 118 du support d'appareillage 110 (voir figure 7) et une position de libération dans laquelle ladite partie de blocage 311 est écartée de ladite surface de blocage 118 (voir figure 8), et, d'autre part, une touche d'actionnement 140 pour la commande du déplacement de chaque bras de verrouillage 310, basculante autour d'un axe de basculement X1 qui s'étend parallèlement au plan moyen P de ladite plaque de façade 120 (voir figures 4 et 6).

L'axe de basculement X1 de la touche d'actionnement 140 est parallèle à l'axe X de pivotement du couvercle 130 (voir figure 6).

Ici, préférentiellement, il est prévu deux bras de verrouillage 310 commandés simultanément par ladite touche d'actionnement 140 et le support d'appareillage 110 comprend en correspondance deux surfaces de blocage 118.

Les surfaces de blocage 118 forment une partie de deux encoches réalisées dans la tranche avant des deux parois latérales principales 111, 112 du support d'appareillage 110.

Comme le montre plus particulièrement la figure 3, les deux bras de verrouillage 310 sont positionnés sous la branche longitudinale avant 121 du cadre de la plaque de façade 120, dans deux renfoncements 121F de la face arrière de celle-ci.

Chaque bras de verrouillage 310 se présente sous la forme d'une plaquette, réalisée par exemple en matière métallique, qui s'étend en longueur entre une partie d'extrémité 311 formant ladite partie de blocage et une autre partie d'extrémité 312 opposée formant une partie d'actionnement.

Comme le montrent les figures 3 et 6, les deux bras de verrouillage 310 sont positionnés de sorte que leurs faces principales sont parallèles audit plan moyen P de la plaque de façade 120 et leur partie d'actionnement 312 sont placées proches l'une de l'autre dans une région centrale de la branche longitudinale avant 121, située à mi-chemin entre deux côtés opposés de la plaque de façade 120.

Comme le montrent les figures 3 et 6, dans ledit renfoncement 121F de la plaque de façade 120, chaque bras de verrouillage 310 est monté pivotant sur la plaque de façade 120, autour d'un axe de pivotement Z perpendiculaire audit plan moyen P de la plaque de façade 120. Cet axe de pivotement Z est donc perpendiculaire à l'axe de basculement X1 de la touche d'actionnement 140. Dans le plan moyen P de la plaque de façade 120, les axes de pivotement Z des deux bras de verrouillage 310 sont placés sur une ligne parallèle aux axes X et X1 (voir figure 6) et aux parties des bords périphériques interne 121C et externe 120C de la plaque de façade formant les bords longitudinaux de ladite branche longitudinale avant 121 de la plaque de façade 120.

Comme le montent les figures 3 et 6, le pivotement de chaque bras de verrouillage 310 est assuré par l'engagement avec jeu d'un plot cylindrique 128 issu de la plaque de façade 120 dans un logement au contour circulaire 313 du bras de verrouillage 310. Préférentiellement, chaque bras de verrouillage 310 comprend une ouverture circulaire 313 accueillant ledit plot cylindrique 128 issu de la plaque de façade 120.

On notera sur la figure 6 que l'ouverture circulaire 313 de chaque bras de verrouillage 310 est située à proximité de l'extrémité d'actionnement 312 dudit bras de verrouillage 310 si bien que l'axe de pivotement Z est proche de l'extrémité d'actionnement 312 et assez éloigné de l'extrémité de blocage 311 du bras de verrouillage 310. Ainsi, un pivotement du bras de verrouillage 310 d'un petit angle autour de l'axe de pivotement Z, selon un sens horaire matérialisé par la flèche H ou un sens antihoraire matérialisé par la flèche AH, suffit pour engendrer, compte de tenu du bras de levier, un déplacement angulaire satisfaisant de la partie de blocage 311 dudit bras de verrouillage 310 entre ses positions de verrouillage et de libération.

La touche d'actionnement 140 comporte une paroi d'appui 141 placée au-dessus de la branche longitudinale avant 121 du cadre de la plaque de façade 120. Cette paroi d'appui 141 présente une face avant 141A qui forme une surface d'appui d'un doigt d'un utilisateur. La touche d'actionnement 140 est adaptée à basculer autour de l'axe de basculement X1 entre une position d'attente dans laquelle ladite face avant 141A de ladite paroi d'appui 141 s'étend sensiblement parallèlement au plan moyen P de la plaque de façade 120 (voir figures 7, 10 et 13) et une position d'actionnement, basculée vers l'extérieur de la plaque de façade 120, dans laquelle ladite paroi d'appui 141 est rapprochée du bord périphérique externe 120C de ladite plaque de façade 120 avec sa face avant 141A inclinée d'un angle A (de l'ordre de 10 degrés) par rapport au plan moyen P de la plaque de façade 120 (voir figures 8 et 9).

La touche d'actionnement 140 comprend une nervure d'actionnement 143 qui s'étend en hauteur vers l'arrière à partir de la face arrière 141B de la paroi d'appui 141, sensiblement perpendiculairement à ladite paroi d'appui 141. Cette nervure d'actionnement 143 est en contact permanent avec chaque bras de verrouillage 310. Plus particulièrement cette nervure d'actionnement 143 est en contact permanent avec les parties d'actionnement 312 des bras de verrouillage 310.

Comme le montrent notamment les figures 4 et 7, la plaque de façade 120 comprend une fente 121A traversée par la nervure d'actionnement 143 de la touche d'actionnement 140 pour atteindre la pointe des parties d'actionnement 312 des bras de verrouillage 310.

Avantageusement, la nervure d'actionnement 143 de la touche d'actionnement 140 porte sur une de ses faces au moins une boursouflure 144 qui s'étend longitudinalement sur la hauteur de ladite nervure d'actionnement 143 (voir figure 3). Chaque boursouflure 144 est adaptée à entrer en contact avec une partie interne de la plaque de façade 120 s'étendant le long d'un bord de ladite fente 121A pour indexer la position d'attente de ladite touche d'actionnement 140.

Selon les modes de réalisation de l'invention représentés sur les différentes figures, la paroi d'appui 141 de la touche d'actionnement 140 est orientée en longueur parallèlement aux parties des bords périphériques interne 121C et externe 120C de la plaque de façade 120 formant les bords longitudinaux de ladite branche longitudinale avant 121 de la plaque de façade 120.

Avantageusement, ladite paroi d'appui 141 de la touche d'actionnement 140 présente une surface étendue rectangulaire et une longueur légèrement supérieure à la longueur de ladite branche longitudinale avant 121 du cadre de la plaque de façade 120.

Cette paroi d'appui 141 est bordée de deux rebords longitudinaux interne et externe 140A, 140B ainsi que de deux rebords transversaux 140C.

La paroi d'appui 141 couvre ici toute la face avant de ladite branche longitudinale avant 121 de ladite plaque de façade 120 et le rebord longitudinal externe 140B ainsi que les rebord transversaux 140C de la touche d'actionnement 140 recouvrent une partie dudit bord périphérique externe 120C de la plaque de façade 120 qui forme, d'une part, tout le bord longitudinal externe 120C de ladite branche longitudinale avant 121, et, d'autre part, une partie des bords transversaux externes de cette branche 121.

Ici, la nervure d'actionnement 143 s'étend en longueur parallèlement aux bords longitudinaux de ladite paroi d'appui 141. Il est prévu alors deux boursouflures 144 placées à proximité des deux extrémités de la nervure d'actionnement 143.

Comme cela a déjà été décrit précédemment, lorsque le support d'appareillage 110 est verrouillé en position abaissée et la touche d'actionnement 140 est placée en position d'attente, le couvercle 130 s'étend dans le prolongement de la touche d'actionnement 140 et son bord longitudinal 130A jouxte le rebord longitudinal interne 140A de la touche d'actionnement 140 de sorte que la face avant 131A du couvercle 130 et la face avant 141A de la paroi d'appui 141 de la touche d'actionnement 140 forment esthétiquement une face avant plane de finition de l'appareillage 100.

Pour le montage à basculement de la touche d'actionnement 140 sur la plaque de façade 120, comme le montre la figure 3, il est prévu sur la face arrière 141B de la paroi d'appui 141 de la touche d'actionnement 140, le long du rebord longitudinal interne 140A, deux conduits cylindriques 145 alignés suivant l'axe X1. La plaque de façade 120 comporte, en correspondance, sur sa face arrière, deux rainures 121D au profil cylindrique dont les axes sont alignés suivant l'axe X1. Chacune des rainures 121D comporte un retour perpendiculaire 121E au profil cylindrique et il est prévu dans ladite plaque de façade 120 deux ouvertures 121B positionnées sur le trajet des deux rainures 121D (voir figure 4).

Les deux conduits cylindriques 145 de la touche d'actionnement 140 sont engagés au travers des ouvertures 121B de la plaque de façade 120 pour être accessibles sous ladite plaque de façade 120 dans l'axe desdites rainures 121D. Deux tiges 330 sont enfilées dans les rainures 121D, au travers des conduits cylindriques 145, puis une extrémité de chacune des tiges 330 est rabattue en rotation à angle droit pour être engagée dans le retour perpendiculaire 121E correspondant. Les deux tiges 330 solidarisent la touche d'actionnement 140 à la plaque de façade 120 et forment un axe (s'étendant selon l'axe X1) autour duquel pivotent les conduits cylindriques 145 engagées dans lesdites ouvertures 121B.

Par ailleurs, il est avantageusement prévu des moyens de rappel qui poussent en permanence chaque bras de verrouillage 310 dans sa position de verrouillage.

Lesdits moyens de rappel sont des moyens élastiques, des ressorts 320, comprimés entre chaque bras de verrouillage 310 et ladite nervure d'actionnement 143 de la touche d'actionnement 140 de sorte qu'ils agissent également en permanence sur ladite touche d'actionnement 140 pour la ramener vers sa position d'attente. Chaque bras de verrouillage 310 comporte un téton 314 sur lequel est enfilée une extrémité du ressort 320 de sorte que ce dernier est correctement positionné. L'autre extrémité de chaque ressort 330 est juste placée en appui contre ladite nervure d'actionnement 143 de la touche d'actionnement 140.

Enfin, à l'arrière de la plaque de façade 120, les divers éléments du système de verrouillage 300 sont protégés par une plaque de carénage 400 fixée sur la face arrière de la plaque de façade 120 par des vis V4 vissées dans des orifices taraudés de la plaque de façade 120. Cette plaque de carénage 400 comporte sur une face interne deux rainures 402 qui maintiennent en place les deux extrémités rabattues des tiges 330.

En référence aux figures 7 à 14 d'une part et aux figures 15 à 18 d'autre part, nous allons décrire maintenant l'ouverture de l'appareillage 100 ; 100'.

Sur les figures 6, 7, 15 et 16, l'appareillage 100 ; 100' est représenté à l'état fermé avec son support d'appareillage 110 maintenu en position abaissée sous la plaque de façade 120 par les bras de verrouillage 310 poussés en position de verrouillage par les ressorts 320. Dans la position de verrouillage, Les parties de blocage 311 des bras de verrouillage 320 sont engagées dans les encoches correspondantes du support d'appareillage 110, en appui contre les surfaces de blocage 118. Dans cet état fermé, le couvercle 130 s'étend dans le prolongement de la touche d'actionnement 140 et son bord longitudinal 130A jouxte le rebord longitudinal interne 140A de la touche d'actionnement 140 de sorte que la face avant 131A du couvercle 130 et la face avant 141A de la paroi d'appui 141 de la touche d'actionnement 140 forment esthétiquement une face avant plane de finition de l'appareillage 100 ; 100'.

Comme le montrent les figures 8 et 9, pour ouvrir l'appareillage 100 ; 100', l'utilisateur appuie avec un doigt sur la paroi d'appui 141 de la touche d'actionnement 140 pour la faire basculer vers l'extérieur de la plaque de façade 120. Préférentiellement, une marque 147 est prévue dans une région centrale de la face avant 141A de la paroi d'appui 141 de la touche d'actionnement 140 pour indiquer à l'utilisateur l'endroit où il peut appuyer avec son doigt sur ladite paroi d'appui 141, mais, avantageusement, en appuyant à n'importe quel endroit de la face avant 141A de la paroi d'appui 141, il provoque le basculement de ladite touche d'actionnement 140 et l'actionnement via la nervure d'actionnement 143 desdits bras de verrouillage 310. En effet, lors de son basculement, la nervure d'actionnement 143 pousse légèrement les parties d'actionnement 312 des bras de verrouillage 310 qui pivotent autour des axes de pivotement Z respectivement suivant les flèches H et AH (voir figure 6) pour prendre leur position de libération à l'encontre de la force de poussée des ressorts 320. Les parties de blocage 311 des deux bras de verrouillage 310 sont dégagées des encoches du support d'appareillage 110 et elles ne sont plus en appui contre lesdites surfaces de blocage 118 de ce dernier.

Les ressorts de torsion 230 du système de pivotement 200 ; 200' libèrent alors leur énergie de torsion et provoquent le pivotement de l'arbre d'entrainement en rotation 120. Celui-ci entraîne en rotation la pièce de transmission 260 ; 260' monobloc.

Les deux bielles 265 de la pièce de transmission 260 amorcent leur pivotement suivant la flèche R (voir la figure 9). Ce faisant elles glissent contre les pieds cylindriques des pions de centrage 115 portés par les parois latérales principales 111, 112 du support d'appareillage 110 en poussant sur les pions de centrage 115 supérieurs. Les bielles 265 entraînent alors en rotation le support d'appareillage 110 qui pivote suivant la flèche O (voir figures 9 à 14) jusqu'à atteindre sa position relevée au-dessus de la plaque de façade 120, donc au-dessus de la paroi de réception 10 (voir figures 13 et 14).

Comme le montrent les figures 17 et 18, les deux bielles 265' de la pièce de transmission 260' amorcent leur pivotement suivant la flèche R. Ce faisant elles glissent contre le pied cylindrique de chaque pion de centrage 115 avec leur bord longitudinal interne inférieur 266'A qui pousse sur celui-ci. Les bielles 265' entraînent alors en rotation le support d'appareillage 110 qui pivote suivant la flèche O (voir figures 17 et 18) jusqu'à atteindre sa position relevée au-dessus de la plaque de façade 120, donc au-dessus de la paroi de réception 10 (voir figures 17 et 18).

Après avoir appuyé brièvement sur la touche d'actionnement 140, l'utilisateur peut la relâcher. Celle-ci, sous la poussée des ressorts 320, reprend immédiatement sa position d'attente stable. Les boursouflures 144 prennent appui contre les faces internes de la fente 121A de la plaque de façade 120 pour placer correctement la paroi d'appui 141 de la touche d'actionnement 140 en position d'attente, parallèle au plan moyen P de la plaque de façade 120. Sous la poussée des ressorts 320 les bras de verrouillage 310 pivotent vers leur position de verrouillage et, lors de la montée dudit support d'appareillage 110, les tranches avant des parois latérales principales 111, 112 du support d'appareillage 110 glissent contre les parties de blocage desdits bras de verrouillage 310 qui n'empêchent pas la montée dudit support d'appareillage 110.

Le support d'appareillage 110 atteint sa position relevée stable lorsque son élément de butée 114 arrive en butée au fond de la rainure de butée 127 de la plaque de façade 120.

Dans cette position relevée, la façade fonctionnelle FA de l'appareillage 100 ; 100' est accessible à l'utilisateur au-dessus de la paroi de réception 10.

Pour fermer l'appareillage 100 ; 100', il suffit d'exercer une pression sur le couvercle 130 de manière à faire basculer le support d'appareillage 110 suivant la flèche F (voir figures 13, 14 et 17) vers sa position abaissée sous la plaque de façade 120 et donc sous la paroi de réception 10. Ce basculement inverse provoque le basculement inverse des bielles 265 ; 265' et donc le pivotement de l'arbre d'entraînement en rotation 220 qui entraîne la torsion des ressorts de torsion 230 du système de pivotement 200. Ces ressorts de torsion 230 emmagasinent alors de nouveau de l'énergie de torsion. La position abaissée du support d'appareillage 110 est atteinte lorsque les parties de blocage 311 des bras de verrouillage 310, poussés par les ressorts 320, s'engagent dans les encoches du support d'appareillage 110, contre les surfaces de blocage 118.

Selon une variante non représentée, on pourrait prévoir que la touche d'actionnement soit une petite touche piano. De ce fait, la paroi d'appui de la touche d'actionnement présente un contour rectangulaire et la nervure d'actionnement s'étend en longueur perpendiculairement aux bords longitudinaux de ladite paroi d'appui. La paroi d'appui de la touche d'actionnement est alors orientée en longueur perpendiculairement aux parties des bords périphériques interne et externe de la plaque de façade formant les bords longitudinaux de ladite branche de la plaque de façade.

En outre selon une autre variante non représentée, on pourrait envisager que lesdits moyens de rappel sont des moyens élastiques comprimés entre chaque bras de verrouillage et une partie de la plaque de façade.

## Revendications

1. Appareillage (100; 100') qui comprend :
- une plaque de façade (120) présentant une ouverture;
- un support d'appareillage (110) monté à basculement au travers de ladite ouverture (124) entre une position abaissée dans laquelle il s'étend en dessous de la plaque de façade et une position relevée dans laquelle il s'étend en majeure partie au-dessus de la plaque de façade ;
- un système de pivotement (200) du support d'appareillage qui comprend un arbre d'entraînement en rotation (220), au moins un amortisseur (240) et au moins un ressort de torsion (230) sous contrainte liés à l'arbre d'entraînement en rotation ainsi que deux bielles (265 ; 265') parallèles, agencées de manière à transmettre le mouvement de rotation de l'arbre d'entraînement en rotation audit support d'appareillage,
dans lequel le système de pivotement comprend une pièce de transmission (260 ; 260') monobloc rigide qui se présente sous la forme d'un U avec une partie longitudinale (261) et deux parties latérales (262), la partie longitudinale (261) s'étendant le long de l'arbre d'entraînement en rotation (220) et lesdites parties latérales (262) s'étendant de part et d'autre des extrémités (222) de celui-ci si bien que la pièce de transmission (260 ; 260') encadre l'arbre d'entraînement en rotation (220), l'arbre d'entraînement à rotation étant lié à cette pièce de transmission monobloc, à la racine (263) des deux parties latérales dont les extrémités libres forment lesdites bielles (265 ; 265') et coopèrent de manière glissante avec ledit support d'appareillage (110).

2. Appareillage selon la revendication 1, dans lequel chacune des deux bielles (265) comporte deux bords longitudinaux externes (265A) engagés de manière glissante dans des moyens de rainure prévus en saillie sur une face d'une paroi latérale principale (111,112) du support d'appareillage (110).

3. Appareillage selon la revendication 2, dans lequel lesdits moyens de rainure comprennent deux pions de centrage (115) présentant chacun une tête (115B) et un pied cylindrique (115A), disposés de part et d'autre de chaque bielle (265) de sorte que chaque bord longitudinal externe (265A) de ladite bielle (265) est engagé de manière glissante sous la tête (115B) d'un pion de centrage (115) contre la surface externe du pied cylindrique (115A) dudit pion de centrage (115).

4. Appareillage selon la revendication 1, dans lequel chacune des deux bielles (265') comporte deux bords longitudinaux internes (266'A) engagés de manière glissante dans des moyens de rainure prévus en saillie sur une face d'une paroi latérale principale (111,112) du support d'appareillage (110).

5. Appareillage selon la revendication 4, dans lequel lesdits deux bords longitudinaux internes (266'A) de chaque bielle (265') sont les deux bords longitudinaux parallèles d'une lumière oblongue (266') prévue dans ladite bielle (265').

6. Appareillage selon l'une des revendications 4 et 5, dans lequel lesdits moyens de rainure comprennent, pour chaque bielle (265'), un pion de centrage (115) avec une tête et un pied cylindrique, les deux bords longitudinaux internes (266'A) de ladite bielle étant engagés de manière glissante sous la tête du pion de centrage contre la surface externe du pied cylindrique dudit pion de centrage.

7. Appareillage selon l'une des revendications 3 et 6, dans lequel ladite surface externe du pied cylindrique (115A) de chaque pion de centrage (115) est libre de tourner autour de l'axe dudit pied cylindrique.

8. Appareillage selon l'une des revendications précédentes, dans lequel ladite pièce de transmission (260) est réalisée par découpage et pliage d'une tôle métallique.

9. Appareillage selon la revendication précédente, dans lequel ladite pièce de transmission (260) est réalisée en acier.

10. Appareillage selon l'une des revendications 1 à 7, dans lequel ladite pièce de transmission est réalisée par moulage d'une matière métallique telle que du Zamak.

## Patentansprüche

1. Gerät (100; 100'), das
- eine Frontplatte (120) mit einer Öffnung,
- einen Geräteträger (110), der durch die Öffnung (124) hindurch zwischen einer abgesenkten Stellung, in der er sich unterhalb der Frontplatte erstreckt, und einer angehobenen Stellung, in der er sich größtenteils oberhalb der Frontplatte erstreckt, schwenkbar montiert ist,
- ein System (200) zum Schwenken des Geräteträgers, das eine Welle (220) für einen Drehantrieb, mindestens einen Stoßdämpfer (240) und mindestens eine gespannte Torsionsfeder (230), die mit der Drehantriebswelle verbunden sind, und zwei parallele Pleuelstangen (265; 265'), die so angeordnet sind, daß sie die Drehbewegung der Drehantriebswelle auf den Geräteträger übertragen,
aufweist,
wobei das Schwenksystem ein einteiliges steifes Übertragungsteil (260; 260') aufweist, das U-förmig mit einem Längsteil (261) und zwei Seitenteilen (262) ist, wobei sich das Längsteil (261) entlang der Drehantriebswelle (220) erstreckt und sich die Seitenteile (262) beiderseits der Enden (222) derselben erstrecken, so daß das Übertragungsteil (260; 260') die Drehantriebswelle (220) an der Wurzel (263) der beiden Seitenteile, deren freie Enden die Pleuelstangen (265; 265') bilden und gleitend mit dem Geräteträger (110) zusammenwirken, umgibt, wobei die Drehantriebswelle mit dem einteiligen Übertragungsteil verbunden ist.

2. Gerät gemäß Anspruch 1, wobei jede der beiden Pleuelstangen (265) zwei äußere Längsränder (265A) aufweist, die gleitend in Nutmittel eingesetzt sind, die auf einer Seite einer Hauptseitenwand (111, 112) des Geräteträgers (110) hervorstehend vorgesehen sind.

3. Gerät gemäß Anspruch 2, wobei die Nutmittel zwei Zentrierstifte (115) aufweisen, von denen jeder einen Kopf (115B) und einen zylindrischen Fuß (115A) aufweist, die beiderseits jeder Pleuelstange (265) angeordnet sind, so daß jeder äußere Längsrand (265A) der Pleuelstange (265) unter dem Kopf (115B) eines Zentrierstifts (115) gegen die äußere Oberfläche des zylindrischen Fußes (115A) des Zentrierstifts (115) gleitend eingesetzt ist.

4. Gerät gemäß Anspruch 1, wobei jede der beiden Pleuelstangen (265') zwei innere Längsränder (266'A) aufweist, die gleitend in Nutmittel eingesetzt sind, die auf einer Seite einer Hauptseitenwand (111, 112) des Geräteträgers (110) hervorstehend vorgesehen sind.

5. Gerät gemäß Anspruch 4, wobei die beiden inneren Längsränder (266'A) jeder Pleuelstange (265') die beiden parallelen Längsränder eines in der Pleuelstange (265') vorgesehenen langgestreckten Durchbruchs (266') sind.

6. Gerät gemäß einem der Ansprüche 4 und 5, wobei die Nutmittel für jede Pleuelstange (265') einen Zentrierstift (115) mit einem Kopf und einem zylindrischen Fuß aufweisen, wobei die beiden inneren Längsränder (266'A) der Pleuelstange unter dem Kopf (115B) eines Zentrierstifts (115) gegen die äußere Oberfläche des zylindrischen Fußes des Zentrierstifts gleitend eingesetzt sind.

7. Gerät gemäß einem der Ansprüche 3 und 6, wobei sich die äußere Oberfläche des zylindrischen Fußes (115A) jedes Zentrierstifts (115) frei um die Achse des zylindrischen Fußes drehen kann.

8. Gerät gemäß einem der vorangehenden Ansprüche, wobei das Übertragungsteil (260) durch Ausschneiden und Falten eines Metallblechs hergestellt worden ist.

9. Gerät gemäß dem vorangehenden Anspruch, wobei das Übertagungsteil (260) aus Stahl hergestellt worden ist.

10. Gerät gemäß einem der Ansprüche 1 bis 7, wobei das Übertragungsteil durch Formen eines metallenen Materials wie etwa Zamak hergestellt worden ist.

## Claims

1. An accessory (100; 100'), comprising:
a façade plate (120) presenting an opening;
an accessory support (110) that is mounted to tilt through said opening (124) between a lowered position in which it extends below the façade plate, and a raised position in which a major portion thereof extends above the façade plate;
a pivot system (200) for pivoting the accessory support that includes a rotary drive shaft (220), at least one damper (240) and at least one torsion spring (230) under stress associated with the rotary drive shaft, and two parallel tabs (265; 265') that are arranged so as to transmit the rotary movement of the rotary drive shaft to said accessory support,
wherein the pivoting system comprises a rigid single-piece transmission part (260; 260') which is in the form of a U with a longitudinal portion (261) and two side portions (262), the longitudinal portion (261) extending along the rotary drive shaft (220) and said side portions (262) extending on either side of the ends (222) thereof so that the transmission part (260; 260') surrounds the rotary drive shaft (220), the rotary drive shaft being connected to said single-piece transmission part, to the root (263) of the two side portions the free ends of which form said tabs (265; 265') and cooperate in slidable manner with said accessory support (110).

2. The accessory according to claim 1, wherein each of the two tabs (265) includes two outer longitudinal edges (265A) that are engaged in slidable manner in groove means that project from a face of a main side wall of the accessory (110).

3. The accessory according to claim 2, wherein said groove means comprise two centering pegs (115), each presenting a head (115B) and a cylindrical anchor (115A), which are arranged on either side of each tab (265) so that each outer longitudinal edge (265A) of said tab (265) is engaged in slidable manner below the head (115B) of a centering peg (115) and against the outside surface of the cylindrical anchor (115A) of said centering peg (115).

4. The accessory according to claim 1, wherein each of the two tabs (265') includes two inner longitudinal edges (266'A) that are engaged in slidable manner in groove means provided projecting from a face of a main side wall (111, 112) of the accessory support (110) .

5. The accessory according to claim 4, wherein said two inner longitudinal edges (266'A) of each tab (265') are the two parallel longitudinal edges of an oblong slot (266') that is provided in said tab (265').

6. The accessory according to any one of claims 4 and 5, wherein for each tab (265'), said groove means comprise a centering peg (115) with a head and a cylindrical anchor, the two inner longitudinal edges (266'A) of said tab being engaged in slidable manner below the head of the centering peg and against the outside surface of the cylindrical anchor of said centering peg.

7. The accessory according to any one of claims 3 and 6, wherein said surface of the cylindrical anchor (115A) of each centering peg (115) is free to turn about the axis of said cylindrical anchor.

8. The accessory according to any one of the preceding claims, wherein said transmission part (260) is made by cutting and folding sheet metal.

9. The accessory according to the preceding claim, wherein said transmission part (260) is made of steel.

10. The accessory according to any one of claims 1 to 7, wherein said transmission part is made by molding a metal material such as Zamak.
